# EUROPEAN PATENT APPLICATION

(11) **EP 1 749 640 A2**
(43) Date of publication of application: **07.02.2007**
(21) Application number: 06253968.9
(22) Date of filing: 28.07.2006
(51) Int. Cl.: B29C 65/02, B29L 23/00, B29L 23/18, B29L 9/00, B29K 305/00, B29K 305/12, B29K 305/02, B29K 77/00

(54) **Method of coupling polymeric tubing to polymeric coated metal tubing**

(30) Priority: 29.07.2005 US 192913
(71) Applicant: DANA CORPORATION, Toledo, OH 43615 (US)
(72) Inventor: Stieler, David C., Oakland, Michigan 48362 (US); Sleep, Dale L., Hamilton, Indiana 46038 (US); Arndt, John, Wisconsin 53168 (US)
(74) Representative: Cheyne, John Robert Alexander M.

(57) **Abstract**

A method of coupling tubular bodies (12A,14A) is provided, particularly for use in fluid handling systems requiring a fluid-tight, pressurized joint. One tubular body (12A) is made from a polymer. The other tubular body (14A) is formed as a laminate having a metallic layer (34) and a polymeric layer (36) (e.g., nylon coated aluminum tubing). The tubular bodies (12A,14A) are positioned relative to one another (e.g., the laminated tubular body (14A) may be inserted within the polymeric tubular body (12A) when the polymeric layer (36) of the laminated tubular body (14A) is outward of the metallic layer (34). The tubular bodies (12A,14A) are then joined together by induction welding to cause heat transfer from the laminated tubular body's (14A) metallic layer (34) to its polymeric layer (36) thereby resulting in deformation of the polymeric layer (36) and bonding of the polymeric layer (36) to a surface of the polymeric tubular body (12A), forming the joint (68).

## Description

### BACKGROUND OF THE INVENTION

### 1. Field of the Invention

This invention relates to methods for coupling two or more components and, in particular, to a method for coupling polymeric tubing to polymeric coated metal tubing while providing a fluid tight, pressurized joint.

### 2. Discussion of Related Art

Motor vehicles may include various fluid handling systems, such as, but not limited to, fuel systems, power steering systems, heating and cooling systems, and hydraulic braking systems. These fluid handling systems may require the attachment of various tubular bodies to create robust seals and fluid tight, pressurized joints for fluid handling.

A variety of methods are known for joining tubular bodies of a fluid handling system. For example, ITT Industries, Inc. has previously developed a process under the trademark "POSIBOND" that utilizes spin welding to join two tubular bodies. Spin welding does not, however, allow for the simultaneous creation of multiple joints and therefore requires an undesirable amount of time to create multiple joints. Ashland, Inc. has previously developed a process under the registered trademark "EMABOND" using induction welding to joint two thermoplastic bodies. This process, however, requires the - use of a bonding agent or resin disposed between the thermoplastic bodies and having metallic particles.

The inventors herein have recognized a need for a method for coupling components in a fluid handling system that will minimize and/or eliminate one or more of the above-identified deficiencies.

### SUMMARY OF THE INVENTION

The present invention relates to a method for coupling first and second tubular bodies.

A method in accordance with the present invention includes the step of providing a first tubular body. The first tubular body is made from a polymer. The method also includes the step of providing a second tubular body. The second tubular body is formed as a laminate having a metallic layer and a polymeric layer. The method further includes the step of positioning one of the first and second tubular bodies relative to the other of the first and second tubular bodies. The method further includes the step of energizing a conductor proximate the first and second tubular bodies to generate heat transfer from the metallic layer of the second tubular body to the polymeric layer of the second tubular body to deform the first polymeric layer of the second tubular body and bond the second tubular body to the first tubular body.

A method in accordance with the present invention has significant advantages relative to conventional manufacturing methods for coupling tubular bodies. The method allows two tubular bodies to be joined together without the use of a bonding agent or other intermediary. The method also allows multiple, fluid tight joints to be formed simultaneously thereby reducing assembly time.

These and other advantages of this invention will become apparent to one skilled in the art from the following detailed description and the accompanying drawings illustrating features of this invention by way of example.

### BRIEF DESCRIPTION OF THE DRAWINGS

Figure 1 is a cross-sectional view illustrating one embodiment of a fluid coupling first formed in accordance with the present invention.

Figure 2 is a cross-sectional view illustrating another embodiment of a fluid coupling first formed in accordance with the present invention.

Figure 3 is a cross-sectional view illustrating yet another embodiment of a fluid coupling first formed in accordance with the present invention.

Figure 4 is a cross-sectional view illustrating yet another embodiment of a fluid coupling first formed in accordance with the present invention..

Figure 5 is a cross-sectional view illustrating yet another embodiment of a fluid coupling first formed in accordance with the present invention..

Figure 6 is a cross-sectional view illustrating yet another embodiment of a fluid coupling first formed in accordance with the present invention..

Figure 7 is a flow chart illustrating a method in accordance with the present invention.

### DETAILED DESCRIPTION OF EMBODIMENTS OF THE INVENTION

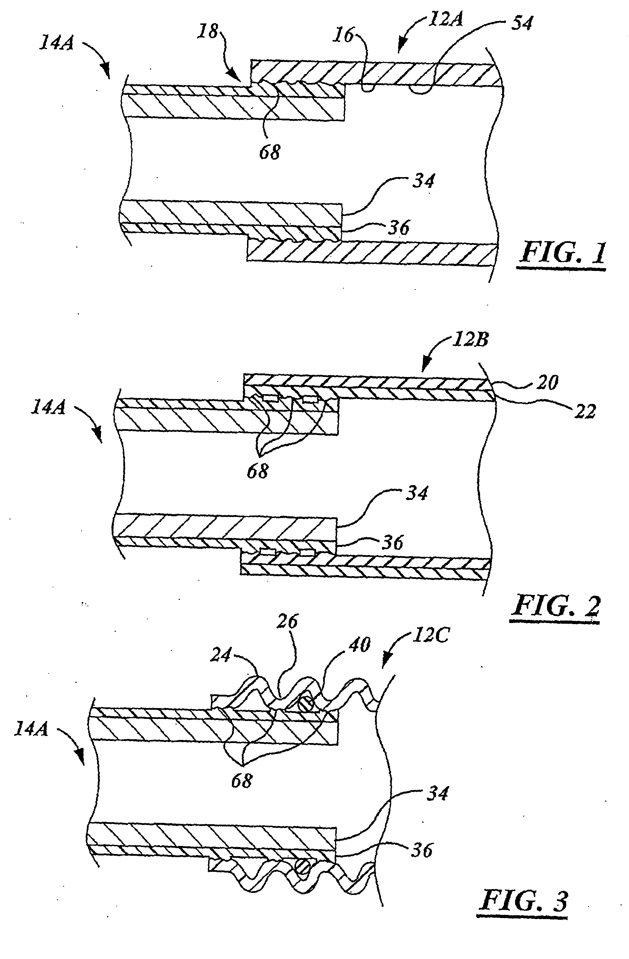

Referring now to the drawings wherein like reference numerals are used to identify identical components in the various views, Figures 1 illustrates one embodiment of a fluid coupling 10A formed in accordance with the present invention. Fluid coupling 10A may be provided to transport fluid in a fluid handling system of a motor vehicle. Fluid handling systems constructed in accordance with the present invention may be particularly adapted for use in an automobile or light truck, but it should be understood that the inventive method described herein could be used for a variety of fluid handling systems for vehicular and non-vehicular applications. Coupling 10A includes at least a pair of tubular bodies 12A, 14A.

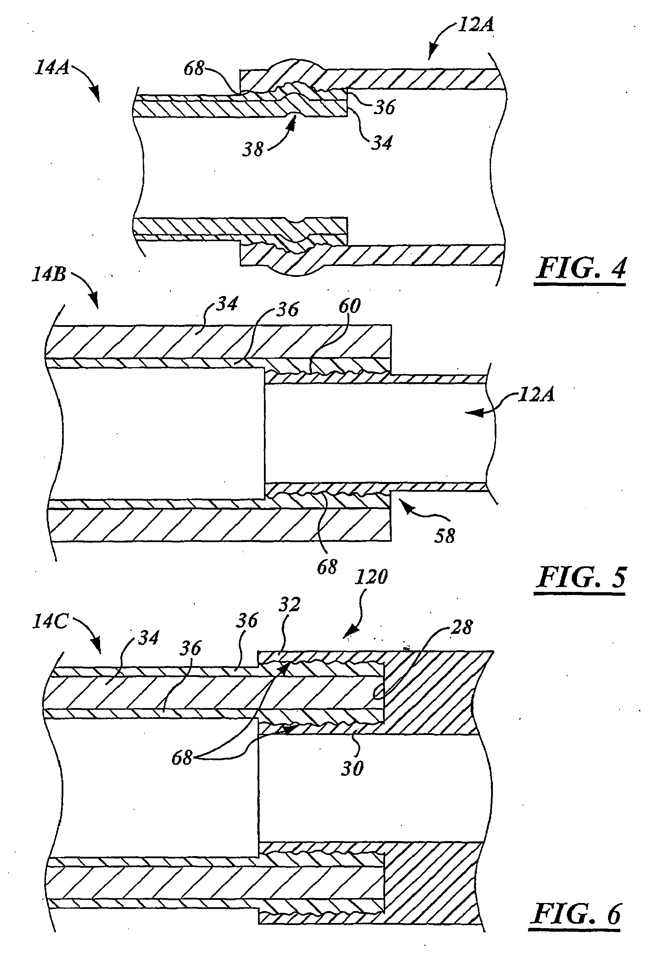

Tubular body 12A provides flexible tubing for use in fluid handling. Body 12A is made from a polymer such as a thermoplastic and may be made of nylon. Body 12A may be cylindrical in shape defining a circular fluid passageway 16. Body 12A defines at least one opening 18 configured for insertion of tubular body 14A.
Tubular body 12A may define multiple openings 18 (e.g, at opposite longitudinal ends of body 12A or at an intermediary point along body 12A) to allow interconnection of multiple bodies similar to body 14A. Tubular body 12A may comprise monowall tubing as illustrated in Figure 1. Referring to Figure 2, in accordance with another embodiment of the invention, a body 12B may be formed as a laminate having multiple layers 20, 22 of the same or different polymeric materials. Referring again to Figure 1, body 12A may be substantially straight. Body 12A may also be formed to provide a fluid pathway that is not straight. Referring to Figure 3, in another embodiment of the invention, a tubular body 12C may be corrugated defining a plurality of radially outer peaks 24 and radially inner valleys 26. Referring to Figure 6, in accordance with yet another embodiment of the invention, a tubular body 12D may be formed with a recess 28 formed in one longitudinal end between the radially inner and outer surfaces 30, 32 of tubular body 12D.

Referring again to Figure 1, tubular body 14A provides relatively rigid tubing for use in fluid handling. Body 14A is formed as a laminate having a metallic layer 34 and a polymeric layer 36. In the embodiment illustrated in Figure 1, metallic layer 34 is disposed inwardly of polymeric layer 36. Referring to Figure 5, in accordance with another embodiment of the invention, a tubular body 14B may be formed with metallic layer 34 disposed outwardly of polymeric layer 36. Referring to Figure 6, in accordance with yet another embodiment of the invention, a tubular body 14C may be formed with multiple polymeric layers disposed on opposite sides of metallic layer 34 and the polymeric material may even extend over the end face of layer 34 to interconnect the inner and outer polymeric layers 36. It should be understood that additional laminate layers may be formed inwardly of layer 34 in the case of tubular body 14A or outwardly of layer 34 in the case of tubular body 14B. Further, it should be understood that additional layers may be formed between the metallic layer 34 and polymeric layer(s) 36. and that either of layers 34, 36 may include a plurality of sublayers without departing from the spirit of the present invention.

Layer 34 is metallic and may comprise steel. In a preferred embodiment layer 34 comprises aluminum. Layer 36 is polymeric and may comprise a plastic and, in particular, a thermoplastic. Layer 36 may or may not include a metallic or carbon or other non-metallic filler. In a preferred embodiment, layer 36 comprises nylon. Nylon refers to a family of polyamides generally characterized by the presence of the amide group, --CONH. In a preferred embodiment, the nylon is of a type known as nylon 12. It should be understood, however, that the type of nylon may vary and may be conductive (e.g., through the addition of carbon black) or non-conductive. Layer 36 may be pre-bonded to the layer 34 and may be extruded over layer 34. In one constructed embodiment, body 14A, 14B, or 14C is formed from nylon coated aluminum tubing sold under the registered trademark "HYCOT" by Hydro Aluminum Hycot USA, Inc. The aluminum layer of the tubing has a thickness of about 0.1 to about 1.2 mm. The nylon layer(s) of the tubing has a thickness of between about 80 and about 500 microns and may measure about 150 microns.

Bodies 14A, 14B, 14C may be straight throughout their longitudinal length. Referring to Figure 4, however, body 14A (or body 14B or 14C) may include an end form 38 in the form of a bead or other structure to facilitate formation of a sealed joint. Referring to Figure 3, additional or alternative sealing may be provided by using one or more seals 40 such as O-ring seals. Although seals 40 are only shown in Figure 3, it should be understood that similar seals 40 could be used in any of the embodiments shown in Figures 1-6. Further, although one advantage of the present invention is to ability to form a sealed joint without the use of an intermediate bonding agent, a bonding agent such as the bonding agent sold under the registered trademark "EMABOND" by Ashland, Inc. could be positioned between any of tubular bodies 12A, 12B, 12C or 12D and tubular bodies 14A, 14B, or 14C to assist in formation of a sealed joint.

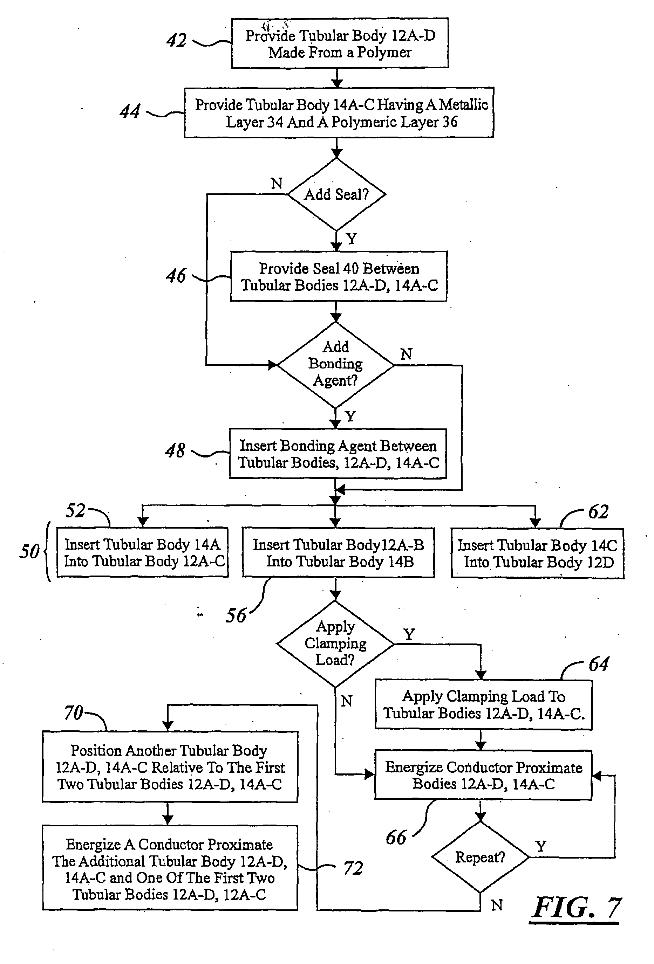

Referring now to Figure 7, a method of coupling first and second tubular bodies in accordance with the present invention is described and illustrated. The method begins with the steps 42, 44 of providing tubular bodies 12A (or 12B or 12C or 12D), 14A (or 14B or 14C). As discussed hereinabove, body 12A is made from a polymer and may be a monowall structure or a multi-layer, laminated structure and may be straight, corrugated or otherwise formed. Body 14A is formed as a laminate having a metallic layer and a polymeric layer and may be straight or formed with an end form 38 to facilitate formation of a sealed joint. Alternatively, the inventive method may include the step 46 of providing a seal 40 disposed about tubular body 14A and between bodies 12A or 12B or 12C, 14A or about tubular body 12A and between bodies 12A, 14B and/or the step 48 of inserting a bonding agent between tubular bodies 12A (or 12B or 12C or 12D), 14A (or 14B or 14C).

The inventive method may continue with the step 50 of positioning at least one of tubular bodies 12A, 14A, relative to the other of tubular bodies 12A, 14A. In accordance with one embodiment of the invention, step 50 may include the substep 52 of inserting tubular body 14A into opening 18 of tubular body 12A (see Fig. 1). Body 14A is inserted in such a way that the polymeric layer 36 of body 14A is disposed radially inwardly of an inner annular surface 54 of body 12A. In accordance with another embodiment of the invention, step 50 may include substep 56 of inserting tubular body 12A into an opening 58 of tubular body 14B (see Fig. 5). Body 12A is inserted in such a way that the polymeric layer 36 of body 14B is disposed radially outwardly of an outer annular surface 60 of body 12A. In accordance with another embodiment of the invention, step 50 may include the substep 62 of inserting one longitudinal end of tubular body 14C into a recess 28 formed in one longitudinal end of tubular body 12D (see Fig. 6). Body 14C is inserted in such a way that the polymeric layers 36 of body 14C are disposed radially inwardly and outwardly of radially inner and outer walls of recess 28.

Prior to forming the sealed joint between bodies 12A (or 12B or 12C or 12D), 14A (or 14B or 14C), it may be desirable to apply a clamping load in the area of the joint to be formed. Accordingly, the inventive method may include the step 64 of applying a clamping load to the interface between bodies 12A (or 12B or 12C or 12D), 14A (or 14B or 14C). The load may be applied using any of a variety of conventional tools and/or methods known in the art. The load may also be applied at multiple locations along bodies 12A (or 12B or 12C or 12D), 14A (or 14B or 14C).

The inventive method continues with the step 66 of energizing a conductor proximate the tubular bodies 12A (or 12B or 12C or 12D), 14A (or 14B or 14C). The conductor may, for example, comprise a coil through which current is fed from a power source. The inventive method thus employs a form of induction welding. The inventors herein have recognized that the resulting electromagnetic field providing inductive energy to the metallic layer 34 of tubular body 14A will result in heat transfer to polymeric layer(s) 36 and, at sufficient levels, will result in deformation of the polymeric layer(s) 36 through melting. This results in one or more bonds or joints or weld rings 68 between tubular body 14A an inner annular surface 54 of tubular body 12A (or between tubular body 14B and outer annular surface 60 of tubular body 12A or between tubular body 14C and the walls of recess 28 of tubular body 12D). Accordingly, step 66 may include the substep of forming one or more weld rings 68 between tubular bodies 12A (or 12B or 12C or 12D), 14A (or 14B or 14C). Referring to Figure 1, a single joint or weld ring 68 may be formed between bodies 12A (or 12B or 12C or 12D), 14A (or 14B or 14C). Alternatively, and with reference to Figures 2-3, multiple joints or weld rings 68 may be formed between bodies 12A (or 12B or 12C or 12D), 14A (or 14B or 14C). In the case of a corrugated body 12C, the joints 68 may be formed between the valleys 26 in body 12C and the polymeric layer 36 of body 14A. The resulting joints 68 have significant strength. Further, the joints 68 form hermetic seals such that fluid handling components may have fluid inlets and outlets sealingly coupled as shown in Figure 1. Referring again to Figure 7, step 66 may be easily repeated one or more times to insure a proper hermetic seal is formed.

The inventive method may be used to form a coupling between two tubular bodies 12A (or 12B or 12C or 12D), 14A (or 14B or 14C). In accordance with one aspect of the invention, however, the inventive method may be used to couple additional tubular bodies. Accordingly, the method may continue with the step 70 of positioning another tubular body relative to two other tubular bodies. For example, another tubular body 14A or 14C may be inserted into an opposite end of any of tubular bodies 12A, 12B, 12C, 12D. Alternatively, another tubular body 12A may be inserted into an opposite end of tubular body 14B. The method may further continue with the step 72 of energizing one of (i) the conductor used in coupling the first two tubular bodies and (ii) a second conductor, proximate the third tubular body and the tubular body to which it is being joined. Figure 7 illustrates steps 70, 72 as occurring subsequent to step 66. In accordance with a significant aspect of the present invention, however, step 70 alternatively may be performed prior to step 66 and steps 66, 72 may occur substantially simultaneously allowing the formation of multiple, fluid tight joints in a more efficient manner than was previously known. It should also be understood that, although not illustrated in Figure 7, steps similar to any or all of steps 46, 48 and 52 may be performed prior to step 72 to assist in formation of the fluid coupling.

A method in accordance with the present invention has significant advantages relative to conventional manufacturing methods for coupling tubular bodies. The method allows two tubular bodies to be joined together without the use of a bonding agent or other intermediary. The method also allows multiple, fluid tight joints to be formed simultaneously thereby reducing assembly time. Further, the inventive method forms a strong, fluid tight joint that is capable of withstanding pressurized applications without the need for complex mechanical seals, while simultaneously reducing the cost and time of conventional manufacturing processes.

While the invention has been shown and described with reference to one or more particular embodiments thereof, it will be understood by those of skill in the art that various changes and modifications can be made without departing from the spirit and scope of the invention.

## Claims

1. A method of coupling first and second tubular bodies, comprising the steps of:
providing said first tubular body, said first tubular body made from a polymer;
providing said second tubular body, said second tubular body formed as a laminate having a metallic layer and a first polymeric layer;
positioning one of said first and second tubular bodies relative to the other of said first and second tubular bodies;
energizing a first conductor proximate said first and second tubular bodies to generate heat transfer from said metallic layer of said second tubular body to said first polymeric layer of said second tubular body to deform said first polymeric layer of said second tubular body and bond said second tubular body to said first tubular body.

2. The method of claim 1 wherein said metallic layer comprises steel.

3. The method of claim 1 wherein said metallic layer comprises aluminum.

4. The method of claim 1 wherein said first polymeric layer comprises plastic.

5. The method of claim 1 wherein said first polymeric layer comprises nylon.

6. The method of claim 1 wherein said first polymeric layer is directly adjacent said metallic layer.

7. The method of claim 1 wherein said first polymeric layer is extruded over said metallic layer.

8. The method of claim 1, further comprising the steps of:
providing a third tubular body, said third tubular body formed as a laminate having a metallic layer and a polymeric layer; and
positioning one of said first and third tubular bodies relative to the other of said first and third tubular bodies;
energizing one of said first conductor and a second conductor proximate said first and third tubular bodies to generate heat transfer from said metallic layer of said third tubular body to said polymeric layer of said third tubular body to deform said polymeric layer of said third tubular body and bond said third tubular body to said first tubular body.

9. The method of claim 8 wherein said step of energizing a conductor proximate said first and second tubular bodies and said step of energizing one of said first conductor and a second conductor proximate said first and third tubular bodies occur substantially simultaneously.

10. The method of claim 1 wherein said first tubular body comprises monowall tubing.

11. The method of claim 1 wherein said first tubular body comprises multilayer tubing.

12. The method of claim 1 wherein said first tubular body comprises straight tubing.

13. The method of claim 1 wherein said first tubular body comprises formed tubing.

14. The method of claim 1 wherein said first tubular body comprises corrugated tubing.

15. The method of claim 1 further comprising the step of applying a clamping load to said first and second tubular bodies.

16. The method of claim 1 wherein said step of energizing a first conductor proximate said first and second tubular bodies includes the substep of forming a first weld ring between said first and second tubular bodies.

17. The method of claim 1 wherein said step of energizing a first conductor proximate said first and second tubular bodies includes the substep of forming first and second weld rings between said first and second tubular bodies.

18. The method of claim 1 further comprising the step of:
providing a seal between said first tubular body and said second tubular body prior to said energizing step.

19. The method of claim 1 wherein said positioning step includes the substep of inserting one of said first and second tubular bodies within an opening in another of said first and second tubular bodies, said one tubular body having an end form formed on a first end of said one tubular body.

20. The method of claim 1 wherein said first polymeric layer is disposed outward of said metallic layer and said positioning step includes the substep of inserting said second tubular body into a first opening of said first tubular body, said first polymeric layer of said second tubular body disposed radially inwardly of an inner annular surface of said first tubular body and bonded to said inner annular surface of said first tubular body in said energizing step.

21. The method of claim 1 wherein said first polymeric layer is disposed inward of said metallic layer and said positioning step includes the substep of inserting said first tubular body into a first opening in said second tubular body, said first polymeric layer of said second tubular body disposed radially outwardly of an outer annular surface of said first tubular body and bonded to said outer annular surface of said first tubular body in said energizing step.

22. The method of claim 1 wherein said second tubular body includes a second polymeric layer, said first and second polymeric layers disposed on opposite sides of said metallic layer.

23. The method of claim 22 wherein said positioning step includes the substep of inserting one end of said second tubular body into a recess formed in one end of said first tubular body between radially inner and outer surfaces of said first tubular body, said first and second polymeric layers bonded to said first tubular body in said energizing step.

24. The method of claim 1, further comprising the step of inserting a bonding agent between said first and second tubular bodies prior to said energizing step.

25. The method of claim 1, further comprising the step of repeating said energizing step.
